# EUROPÄISCHE PATENTSCHRIFT

(11) **EP 3 593 989 B1**
(45) Veröffentlichungstag und Bekanntmachung des Hinweises auf die Patenterteilung: **23.12.2020**
(21) Anmeldenummer: 19168817.5
(22) Anmeldetag: 12.04.2019
(51) Int. Cl.: B32B 5/24, E04B 1/80, E06B 3/70, E04C 2/292, E04C 2/296

(54) **FÜLLUNGSELEMENT**
FILLING ELEMENT
ÉLÉMENT DE REMPLISSAGE

(30) Priorität: 09.07.2018 DE 202018103923 U
(43) Veröffentlichungstag der Anmeldung: 15.01.2020
(73) Patentinhaber: Adeco Türfüllungstechnik GmbH, 33442 Herzebrock-Clarholz (DE)
(72) Erfinder: KALEFELD, Hans-Josef, 33442 Herzebrock-Clarholz (DE); RECKENDREES, Christian, 33442 Herzebrock-Clarholz (DE); FECKE, Hans-Wilhelm, 33442 Herzebrock-Clarholz (DE)
(74) Vertreter: Dantz, Jan Henning

(56) Entgegenhaltungen:
- EP-A1- 1 316 653
- US-A- 2 880 471
- US-B1- 6 789 645

## Beschreibung

Die vorliegende Erfindung betrifft ein Füllungselement für Türen, Fenster oder Fassaden, nach dem Oberbegriff des Anspruches 1.

Die DE 203 14 017 U1 offenbart eine Füllungsplatte, die zwei äußere Deckschichten aufweist, zwischen denen ein wärmeisolierender Kern vorgesehen ist. Auf einer Seite des Kerns ist eine Ausgleichslage zur Aufnahme von Spannungen vorgesehen, so dass bei einer Wärmeausdehnung eine Verbiegung der Füllungsplatte reduziert wird. Bei höheren Temperaturunterschieden zwischen einer Innen- und Außenseite der Füllungsplatte kann es dennoch zu Temperaturspannungen (Bimetalleffekt) kommen.

In dem nachveröffentlichten Gebrauchsmuster DE 20 2017 102 082 wurde daher vorgeschlagen, die äußere Deckschicht über mindestens zwei an dem plattenförmigen Kern festgelegte und voneinander beabstandete elastische Ausgleichslagen an dem Kern zu halten. Dadurch wird die Bewegbarkeit der äußeren Deckschicht verbessert, auch wenn das Problem der Temperalturspannungen noch nicht vollständig gelöst wurde.

Die US 2,880,471 offenbart Platten zur Schallisolierung, die einen aus mehreren Platten gebildeten isolierenden Kern besitzen, der an gegenüberliegenden Außenseiten mit einer Deckschicht überdeckt ist. US 2 880 471 A offenbart dabei alle Merkmale des Oberbegriffs des Anspruchs 1.

Es ist daher Aufgabe der vorliegenden Erfindung, ein Füllungselement für Türen, Fenster oder Fassaden zu schaffen, das eine höhere Sicherheit gegen Durchbiegungen durch Temperaturspannungen besitzt und die dadurch entstehenden Kräfte verringert.

Diese Aufgabe wird mit einem Füllungselement mit den Merkmalen des Anspruches 1 gelöst.

Bei dem erfindungsgemäßen Füllungselement sind zwei äußere Deckschichten über einen wärmeisolierenden Kern miteinander verbunden, wobei der Kern mindestens zwei voneinander getrennte Isolierschichten aufweist, die über mindestens ein elastisches Ausgleichselement aneinander gehalten sind. Die Deckschichten können somit unmittelbar mit einer Isolierschicht verbunden werden, und zum Ausgleich von Temperaturspannungen durch Temperaturunterschiede an den beiden Deckschichten ist ein elastisches Ausgleichselement vorgesehen, das die beiden Isolierschichten aneinander hält. Dadurch wird die Formstabilität des Füllungselementes verbessert, da die Schicht mit dem mindestens einen elastischen Ausgleichselement in einem inneren Bereich des Kerns angeordnet ist.

Vorzugsweise sind mehrere elastische Ausgleichselemente beabstandet voneinander vorgesehen. Das mindestens eine elastische Ausgleichselement kann dabei streifenförmig ausgebildet sein. Insbesondere können elastische Ausgleichselemente vorgesehen sein, die als Streifen in vertikale Richtung in dem Kern angeordnet sind und sich über die gesamte Länge des Füllungselementes in Längsrichtung erstrecken. Auch andere Formen von Ausgleichselementen, beispielsweise horizontale Streifen oder rechteckförmige Schichten, können eingesetzt werden.

Die beiden Isolierschichten können mit dem mindestens einen elastischen Ausgleichselement verklebt sein. Erfindungsgemäß ist mindestens einer Isolierschicht eine Vertiefung zur Aufnahme eines Ausgleichselementes ausgebildet, so dass ein Spalt zwischen den beiden Isolierschichten reduziert wird. Vorzugsweise besitzt die Vertiefung im Wesentlichen die gleiche Tiefe wie die Dicke des Ausgleichselementes, so dass die beiden Isolierschichten formschlüssig oder mit geringem Spiel aneinander gehalten sind. Für eine Bewegung in seitliche Richtung kann der Rand der Vertiefung auch gestuft ausgebildet sein, so dass das elastische Ausgleichselement am Rand der Vertiefung bewegbar bleibt.

Das elastische Ausgleichselement kann beispielsweise aus Zellstoff hergestellt sein, wobei auch andere elastische Materialien eingesetzt werden können.

Die Ebene mit dem elastischen Ausgleichselement kann insbesondere mittig zwischen den Deckschichten angeordnet sein, so dass die Isolierschichten im Wesentlichen die gleiche Dicke aufweisen. Es können aber auch Isolierschichten mit unterschiedlichen Stärken Verwendung finden. Die Isolierschichten können aus einem plattenförmigen Material, beispielsweise aus einem Hartschaum, hergestellt sein, wobei zumindest eine Isolierschicht an einer inneren Seite Vertiefungen für die Ausgleichselemente aufweist.

Die Erfindung wird nachfolgend anhand eines Ausführungsbeispiels mit Bezug auf die beigefügten Zeichnungen näher erläutert. Es zeigen:

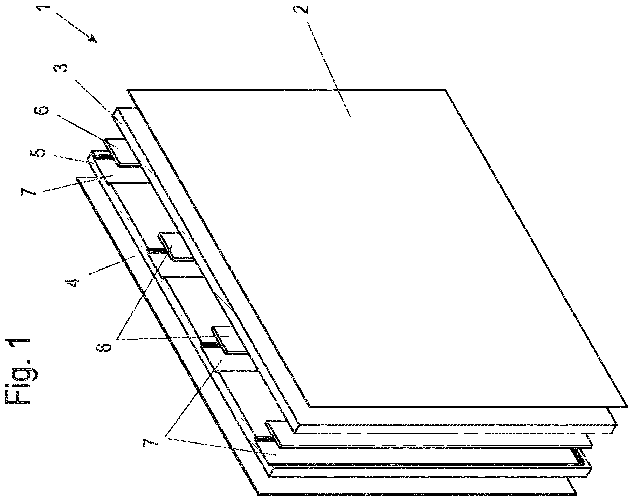

- Figur 1: eine perspektivische Explosionsdarstellung eines erfindungsgemäßen Füllungselementes;
- Figur 2: eine Schnittansicht durch das Füllungselement der Figur 1 in einer montierten Position, und
- Figur 3: eine Detailansicht eines Bereichs des Füllungselementes der Figur 2.

Ein Füllungselement kann als Türfüllung oder plattenförmige Füllung an Fenster und Fassaden eingesetzt werden und besitzt zwei äußere Deckschichten 2 und 4, die beispielsweise aus Metall oder Kunststoff hergestellt sein können. Die äußeren Deckschichten 2 und 4 können Ausschnitte für Sichtfenster aufweisen oder mit Zierleisten versehen sein.

Die beiden Deckschichten 2 und 4 sind über einen plattenförmigen Kern aus wärmeisolierendem Material miteinander verbunden. Der Kern umfasst eine erste Isolierschicht 3, an der die Deckschicht 2 fixiert ist, insbesondere durch Verkleben. Die andere Deckschicht 4 ist mit einer Isolierschicht 5 verbunden, insbesondere verklebt. Die Isolierschichten 3 und 5 sind plattenförmig ausgebildet und können beispielsweise aus einem Hartschaum hergestellt sein. Die Isolierschichten 3 und 5 sind dabei bewegbar aneinander gehalten, wobei hierfür mehrere elastische Ausgleichselemente 6 vorgesehen sind. Die Ausgleichselemente 6 können aus einem elastischen Material, wie Zellstoff, Gummimaterial oder einem anderen geeigneten Material, hergestellt sein. Die Ausgleichselemente 6 sind dabei streifenförmig ausgebildet und erstrecken sich in vertikale Richtung, also in Längsrichtung des Füllungselementes 1, wenn dieses als Türfüllung ausgebildet ist. Die Ausgleichselemente 6 können auch in anderen Formen zwischen den beiden Isolierschichten 3 und 5 angeordnet werden.

An der Isolierschicht 5 sind mehrere Vertiefungen 7 zur Aufnahme der Ausgleichselemente 6 ausgebildet. Die Vertiefungen 7 sind nutförmig und können am Boden mit einem Ausgleichselement 6 verklebt sein.

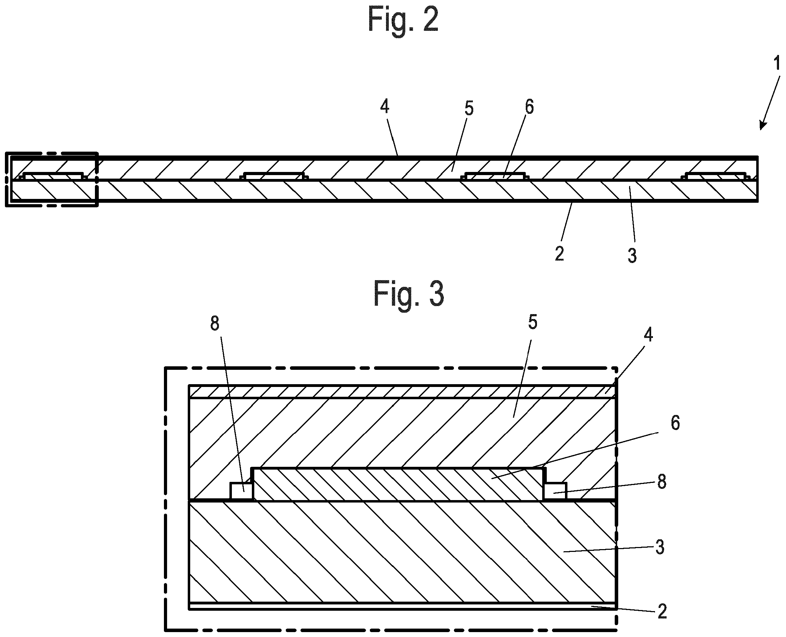

Wie in den Schnittansichten der Figuren 2 und 3 zu sehen ist, besitzt das Ausgleichselement 6 eine Dicke, die etwa der Tiefe der Vertiefung 7 entspricht, so dass die Isolierschichten 3 und 5 aneinander anliegen oder mit nur geringem Spiel von beispielsweise < 1 mm voneinander beabstandet sind. Der Rand der Vertiefung 7 ist mit einer Stufe 8 versehen, die dem Ausgleichselement 6 in eine Richtung quer zur Längsrichtung Bewegungsfreiheit gibt. Durch die Stufe 8 können die Isolierschichten 3 und 5 bei Bedarf auch in seitliche Richtung quer zur Längsrichtung der Streifen bewegt werden. Das Ausgleichselement 6 ist mit der Isolierschicht 3 ebenfalls verklebt, so dass bei Temperaturunterschieden an den beiden äußeren Deckschichten 2 und 4 eine Bewegung der Isolierschichten 3 und 5 relativ zueinander ermöglicht wird.

In dem dargestellten Ausführungsbeispiel umfasst der Kern zwei Isolierschichten 3 und 5, die über mehrere elastische Ausgleichselemente 6 miteinander verbunden sind. Es ist auch möglich, statt zwei Isolierschichten 3 und 5 drei oder mehr Isolierschichten vorzusehen, die jeweils über elastische Ausgleichselemente aneinander gehalten sind. Dadurch wird die Bewegbarkeit der äußeren Deckschichten 2 und 4 relativ zueinander erhöht.

Das Füllungselement 1 kann beispielsweise in einen Rahmen eingesetzt werden, um eine Tür auszubilden, oder zur Isolierung in einer Fenster und Fassadenkonstruktion.

### Bezugszeichenliste

- 1: Füllungselement
- 2: Deckschicht
- 3: Isolierschicht
- 4: Deckschicht
- 5: Isolierschicht
- 6: Ausgleichselement
- 7: Vertiefung
- 8: Stufe

## Patentansprüche

1. Füllungselement (1) für Fenster, Türen oder Fassaden, mit einer ersten Deckschicht (2) und einer zweiten Deckschicht (4), die über einen wärmeisolierenden Kern miteinander verbunden sind, wobei der Kern mindestens zwei voneinander getrennte Isolierschichten (3, 5) aufweist, die über mindestens ein elastisches Ausgleichselement (6) aneinander gehalten sind, **dadurch gekennzeichnet, dass** an mindestens einer Isolierschicht (5) eine Vertiefung der Aufnahme eines Ausgleichselementes (6) ausgebildet ist.

2. Füllungselement nach Anspruch 1, **dadurch gekennzeichnet, dass** mehrere elastische Ausgleichselemente (6) beabstandet voneinander vorgesehen sind.

3. Füllungselement nach Anspruch 1 oder 2, **dadurch gekennzeichnet, dass** das mindestens eine elastische Ausgleichselement (6) streifenförmig ausgebildet ist.

4. Füllungselement nach einem der vorhergehenden Ansprüche, **dadurch gekennzeichnet, dass** die Vertiefung (7) im Wesentlichen dieselbe Tiefe wie die Dicke des Ausgleichselementes (6) besitzt.

5. Füllungselement nach einem der vorhergehenden Ansprüche, **dadurch gekennzeichnet, dass** der Rand der Vertiefung (7) gestuft ausgebildet ist.

6. Füllungselement nach einem der vorhergehenden Ansprüche, **dadurch gekennzeichnet, dass** das elastische Ausgleichselement (6) aus Zellstoff oder einem anderen elastischen Material hergestellt ist.

7. Füllungselement nach einem der vorhergehenden Ansprüche, **dadurch gekennzeichnet, dass** das mindestens eine elastische Ausgleichselement (6) als vertikaler Streifen ausgebildet ist, der sich im Wesentlichen über die gesamte Länge des Kerns in Längsrichtung erstreckt.

8. Füllungselement nach einem der vorhergehenden Ansprüche, **dadurch gekennzeichnet, dass** die beiden Isolierschichten (3, 5) im Wesentlichen die gleiche Dicke aufweisen.

9. Füllungselement nach einem der vorhergehenden Ansprüche 1 bis 7, **dadurch gekennzeichnet, dass** die beiden Isolierschichten (3, 5) unterschiedliche Dicken aufweisen.

## Claims

1. Filler element (1) for windows, doors or facades, with a first cover layer (2) and a second cover layer (4) which are connected together by way of a thermally insulating core, wherein the core comprises at least two insulating layers (3, 5) which are separated from one another and which are held against one another by way of at least one resilient compensating element (6), **characterised in that** a depression for reception of a compensating element (6) is formed at at least one insulating layer (5).

2. Filler element according to claim 1, **characterised in that** several resilient compensating elements (6) are provided at a mutual spacing.

3. Filler element according to claim 1 or 2, **characterised in that** at least one resilient compensating element (6) is of strip-shaped construction.

4. Filler element according to any one of the preceding claims, **characterised in that** the depression (7) has substantially the same depth as the thickness of the compensating element (6).

5. Filler element according to any one of the preceding claims, **characterised in that** the edge of the depression (7) is formed to be stepped.

6. Filler element according to any one of the preceding claims, **characterised in that** the resilient compensating element (6) is produced from cellulose or another resilient material.

7. Filler element according to any one of the preceding claims, **characterised in that** the at least one resilient compensating element (6) is constructed as vertical strips which extend substantially over the entire length of the core in longitudinal direction.

8. Filler element according to any one of the preceding claims, **characterised in that** the two insulating layers (3, 5) have substantially the same thickness.

9. Filler element according to any one of the preceding claims 1 to 7, **characterised in that** the two insulating layers (3, 5) have different thicknesses.

## Revendications

1. Elément de remplissage (1) pour fenêtres, portes ou façades comprenant une première couche de couverture (2) et une seconde de couverture (4) reliées l'une à l'autre par un noyau isolant thermique, le noyau ayant au moins deux couches d'isolation (3, 5) séparées l'une de l'autre et maintenues l'une à l'autre par au moins un élément de compensation (6) élastique,
élément de remplissage **caractérisé en ce que**
au moins l'une des couches d'isolation (5) comporte une cavité pour recevoir un élément de compensation (6).

2. Elément de remplissage selon la revendication 1,
**caractérisé en ce que**
plusieurs éléments de compensation élastique (6) sont prévus, écartés les uns des autres.

3. Elément de remplissage selon la revendication 1 ou 2,
**caractérisé en ce qu'**
au moins un élément de compensation élastique est en forme de bande.

4. Elément de remplissage selon l'une des revendications précédentes,
**caractérisé en ce que**
la cavité (7) a pratiquement la même profondeur que l'épaisseur de l'élément de compensation (6).

5. Elément de remplissage selon l'une des revendications précédentes,
**caractérisé en ce que**
le bord de la cavité (7) est de forme étagée.

6. Elément de remplissage selon l'une des revendications précédentes,
**caractérisé en ce que**
l'élément de compensation élastique (6) est réalisé en une matière alvéolaire ou en une autre matière élastique.

7. Elément de remplissage selon l'une des revendications précédentes,
**caractérisé en ce qu'**
au moins un élément de compensation élastique (6) est réalisé sous la forme d'une bande verticale qui s'étend principalement sur toute la longueur du noyau dans la direction longitudinale.

8. Elément de remplissage selon l'une des revendications précédentes,
**caractérisé en ce que**
les deux couches isolantes (3, 5) ont pratiquement la même épaisseur.

9. Elément de remplissage selon l'une des revendications précédentes 1 à 7,
**caractérisé en ce que**
les deux couches isolantes (3, 5) ont des épaisseurs différentes.
